# EUROPEAN PATENT APPLICATION

(11) **EP 1 441 538 A2**
(43) Date of publication of application: **28.07.2004**
(21) Application number: 03300234.6
(22) Date of filing: 28.11.2003
(51) Int. Cl.: H04N 9/29

(54) **Display apparatus with a cathode ray tube, degaussing circuit for such a display apparatus and process for degaussing a cathode ray tube**

(30) Priority: 21.01.2003 EP 03425022
(71) Applicant: Thomson Licensing S.A., 92100 Boulogne-Billancourt (FR)
(72) Inventor: Frivoli, Alessandro, 03012 Anagni (IT); Ambroselli, Angelo, 04021 Castelforte (IT); Apperti, Ettore, 00155 Roma (IT); Carrozzi, Giovanni, 03018 Valirno (IT); Caltagirone, Nicola, 03011 Alatri Frosinone (IT)
(74) Representative: Rossmanith, Manfred, Dr.

(57) **Abstract**

A display apparatus with a cathode ray tube has a degaussing circuit fed by a voltage. The degaussing circuit includes at least a PTC resistor (R) and at least a degaussing coil (DGC1, DGC2).

Further circuit elements (12, 15, 17) are provided for selecting an impedance of the degaussing circuit based on said voltage.

A process for degaussing the cathode ray tube is also described.

## Description

The invention relates to a display apparatus having a cathode ray tube, to a degaussing circuit for such a display apparatus, and to a process for degaussing a cathode ray tube.

Display apparatus using a cathode ray tube are generally equipped with a degaussing circuit in order to remove the residual magnetic field from the metallic parts. Generally, the degaussing circuit is operated when turning on the display apparatus or upon command from the user.

The operating parameters of the degaussing operation (intensity, pseudo-period of the pulses, decay time, etc.) are determined to best fit a given apparatus and the components of the degaussing circuit are chosen to obtain these parameters. However, in a conventional apparatus, these choices are made for a given standard of the mains voltage to which the apparatus is to be connected.

As a consequence, a problem occurs when an apparatus has to be connected to several standards of mains voltage, notably when the AC input voltage may be either 110 V or 230V.

The invention aims at solving this problem.

In this goal, it is proposed a display apparatus with a cathode ray tube and a degaussing circuit fed by a voltage and comprising at least a PTC resistor, at least a degaussing coil and means for selecting an impedance of the degaussing circuit based on said voltage.

The impedance of the degaussing circuit can therefore be selected so that the operating parameters best fit the display apparatus when it is plugged to mains with a given voltage standard.

In a possible embodiment, the display apparatus comprises a voltage sensor circuit for measuring said voltage and at least one switch controlled by said voltage sensor circuit.

According to a possible solution, said switch selectively connects a first PTC resistor or a second PTC resistor in the degaussing circuit.

When said degaussing circuit comprises a first degaussing coil and a second degaussing coil, it is particularly advantageous and simple that said first degaussing coil and said second degaussing coil be selectively connected in series or in parallel.

The invention also proposes a process for controlling such a display apparatus, which solves the above problem in a particularly safe way. This proposed process has the successive steps of :
- sensing said voltage ;
- selecting said impedance based on said voltage ;
- operating said degaussing circuit.

The invention therefore also proposes a degaussing circuit for a display apparatus with a cathode ray tube, the degaussing circuit being fed by a voltage and comprising at least a PTC resistor, at least a degaussing coil and means for changing the impedance of the degaussing circuit based on said voltage.

The effect of the degaussing circuit can thus be optimal even though the feeding voltage may vary.

According to preferred embodiments :
- the degaussing circuit has a voltage sensor circuit for measuring said voltage and at least one switch controlled by said voltage sensor circuit ;
- said switch selectively connects a first PTC resistor or a second PTC resistor in-circuit ;
- the degaussing circuit comprises a first degaussing coil and a second degaussing coil, and said first degaussing coil and said second degaussing coil are selectively connected in series or in parallel. Lastly, the invention proposes a process for degaussing a cathode ray tube with a degaussing circuit fed by a voltage, comprising the successive steps of :

- sensing said voltage ;
- selecting an impedance of said degaussing circuit based on said voltage ;
- supplying said voltage to said degaussing circuit.

Other features of the invention will appear from the following description of several embodiments of the invention made in the light of the appended drawings, where :
- Figure 1 represents a degaussing circuit of a first embodiment of the invention ;
- Figures 2a to 2d are timing diagrams showing operation of various elements of the circuit of Figure 1 ;
- Figure 3 represents a degaussing circuit of a second embodiment of the invention.

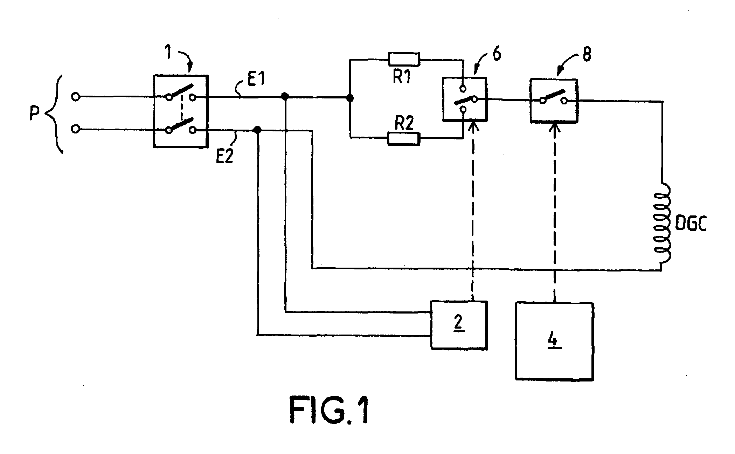

Figure 1 depicts a degaussing circuit of a first embodiment of the invention. The display apparatus having the degaussing circuit of Figure 1 is connected to the mains via a plug P. The plug P is connected to the electrical circuitry of the display apparatus through a mains switch 1. When the apparatus is switched on, the two electrical inputs E1, E2 (outputs of the mains switch 1) thus carry an AC voltage of 110 V or 230 V.

The first electrical input E1 is connected to a first pin of a first PTC resistor R1 and to a first pin of a second PTC resistor R2. The second pin of the first PTC resistor R1 and the second pin of the second PTC resistor R2 are respectively connected to a first input of a selector switch 6 and to a second input of this selector switch 6.

The first PTC resistor R1 is suitable when the mains voltage (voltage between the electrical inputs E1, E2) is 110 V whereas the second PTC resistor R2 is suitable when the mains voltage is 230 V.

An output of the selector switch 6 is connected to an input of a control switch 8. The output of the control switch 8 is connected to a first extremity of a degaussing coil DGC, which second extremity is connected to the second electrical input E2.

The control switch 8 is controlled by a control circuit 4, for instance a micro-processor of the display apparatus.

A voltage sensor circuit 2 is also connected to the electrical inputs E1 and E2 in order to measure the voltage difference between them (and thus the mains voltage supplying the apparatus) and to control the selector switch 6 depending on the measured voltage.

For instance, R1 is a 5 Ω PTC resistor referenced BC96686 whereas R2 is a 26 Ω PTC resistor referenced BC96688 (for use with a degaussing coil DGC having a resistance of 25 Ω).

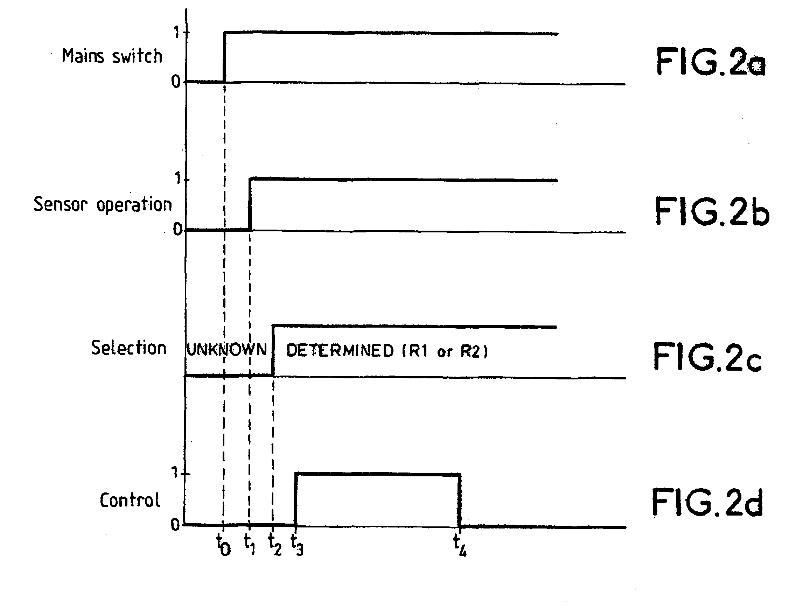

Operation of the degaussing circuit will now be explained with reference to Figures 2a to 2d.

As shown by Figure 2a, the mains switch 1 is closed by the user of the display apparatus at time to. At that time, a lot of transients may occur. The voltage sensor circuit 2 may not be able to operate correctly, on the one hand because it may not be correctly initialised yet and on the other hand because the voltage between the electrical inputs E1 and E2 may not be stabilised.

Normal operation of the voltage sensor circuit 2 thus only starts at time t₁, about 100 ms later than to, as represented on Figure 2b.

At time t₁, the voltage sensor circuit 2 sends a control signal to the selector switch 6 depending on the voltage measured between electrical inputs E1 and E2. If the measured voltage is below 170 V, the voltage sensor circuit 2 controls the selector switch 6 so that it connects the first PTC resistor R1 to the control switch 8 (first input of the selector switch 6 selected). If the measured voltage is above 170 V, the voltage sensor circuit 2 controls the selector switch 6 so that it connects the second PTC resistor R2 to the control switch 8 (second input of the selector switch 6 selected).

At time t₂, after a short delay, due for instance to the activation time of the selector switch 6 (*e.g*. when this selector switch is a relay), the selector switch 6 is in the required state as illustrated on Figure 2c and the desired PTC resistor (R1 or R2) is thus actually connected to the input of the control switch 8.

Between times t₃ and t₄, the control circuit 4 activates the degaussing operation by closing the control switch 8 as shown on Figure 2d. Time t₃ is later than time t₂ so that the correct PTC resistor (R1 or R2) is connected to the degaussing coil DGC from the beginning of the degaussing operation triggered by the control circuit 4 via the control switch 8.

This can realised by triggering the control switch 8 after a predetermined time T (T = t₃ - t₀), stored as a parameter of the control circuit 4 and computed based on the maximum expected delay to have the selector switch 6 in the requested state (delay t₂ - t₀).

The degaussing operation lasts for a pre-determined period of time (t₄ - t₃) necessary for the decay of the degaussing current to take place thanks to the used PTC resistor (R1 or R2).

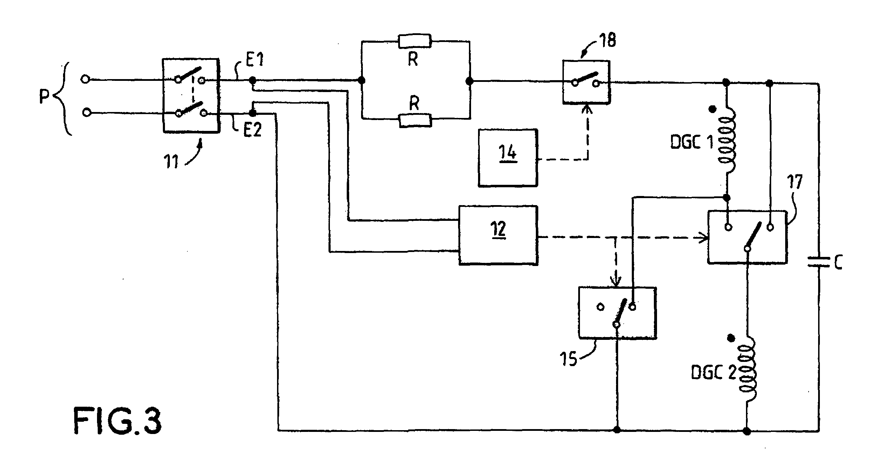

A second embodiment of the invention is represented on Figure 3. Electrical inputs E1 and E2 are fed from the mains via a plug P and a mains switch 11. Two PTC resistors R are connected in parallel between electrical input E1 and a first pin of a control switch 18. In the described example, two identical PTC resistors R (Murata 9 Ω) are used. Instead of 2 parallel PTC resistors, 2 PTC resistors connected in series or even a single PTC resistor could be used.

The second pin of the control switch 18 is connected to a first input of a first path switch 17 through a first degaussing coil DGC1, to a second input of the first path switch 17 and to a first pin of a capacitor C.

The first input of the first path switch 17 is also connected to a second input of a second path switch 15. The first input of the second path switch 15 is left unconnected.

Electrical input E2 is connected to the output of the second path switch 15, to the output of the first path switch 17 through a second degaussing coil DGC2 and to the second pin of the capacitor C.

Capacitor C (0.1 µF) is meant to reduce the impedance of the degaussing coils DGC1, DGC2 at the horizontal scanning frequency.

Preferably, the first degaussing coil DGC1 is a top degaussing coil whereas the second degaussing coil DGC2 is a bottom degaussing coil. As a possible variation, DGC1 is the bottom degaussing coil and DGC2 the top degaussing coil.

A voltage sensor 12 is connected to electrical inputs E1 and E2 in order to measure the voltage therebetween, determine the mains voltage and accordingly control the first and second path switches 15, 17 as further explained below.

A controller 14 (for instance a micro-processor of the display apparatus) controls the control switch 18 to trigger the degaussing operation.

If the voltage sensor 12 detects a mains voltage lower than 180 V, the first and second path switches 15, 17 are controlled so that their second input contacts their output. The first degaussing coil DGC1 is then connected to electrical input E2 via the second path switch 15 and the second degaussing coil DGC2 is connected to the second pin of the control switch 18. The first and second degaussing coils DGC1, DGC2 are thus connected in parallel.

If the voltage sensor 12 detects a mains voltage higher than 180 V, the first and second path switches 15, 17 are controlled so that their first input contacts their output. The first and second degaussing coils DGC1, DGC2 are then connected in series between electrical input E2 and the second pin of the control switch 18.

Thanks to this connection modification of the degaussing coils DGC1 and DGC2, the impedance of the degaussing circuit is modified to best fit the mains voltage, i.e. to keep a slow decay time whatever the mains voltage.

The degaussing operation is made by having the controller 14 close the control switch 18 for a predetermined period. This period can be determined as in the first embodiment so that the adapted connection is made between the degaussing coils DGC1, DGC2 (by use of the first and second path switches 15, 17) before the degaussing operation is triggered by the controller 14.

The invention is of course not limited to the above embodiments. For instance, other values for the threshold voltage than 170 V or 180 V can be used.

## Claims

1. Display apparatus with a cathode ray tube and a degaussing circuit fed by a voltage and comprising :
- at least a PTC resistor (R1, R2 ; R) ;
- at least a degaussing coil (DGC ; DGC1, DGC2) ;
**characterized by** means for selecting an impedance of the degaussing circuit based on said voltage.

2. Display apparatus according to claim 1, comprising a voltage sensor circuit (2 ; 12) for measuring said voltage and at least one switch (6 ; 15, 17) controlled by said voltage sensor circuit.

3. Display apparatus according to claim 2, wherein said switch selectively connects a first PTC resistor (R1) or a second PTC resistor (R2) in the degaussing circuit.

4. Display apparatus according to claim 2, wherein said degaussing circuit comprises a first degaussing coil (DGC1) and a second degaussing coil (DGC2) and wherein said first degaussing coil (DGC1) and said second degaussing coil (DGC2) are selectively connected in series or in parallel.

5. Process for controlling a display apparatus according to claim 1, with the successive steps of :
- sensing said voltage (t1) ;
- selecting said impedance based on said voltage (t2) ;
- operating said degaussing circuit (t3).

6. Degaussing circuit for a display apparatus with a cathode ray tube, the degaussing circuit being fed by a voltage and comprising :
- at least a PTC resistor (R1, R2 ; R) ;
- at least a degaussing coil (DGC ; DGC1, DGC2) ;
**characterized by** means for changing the impedance of the degaussing circuit based on said voltage.

7. Degaussing circuit according to claim 6, comprising a voltage sensor circuit (2 ; 12) for measuring said voltage and at least one switch (6 ; 15, 17) controlled by said voltage sensor circuit.

8. Degaussing circuit according to claim 7, wherein said switch selectively connects a first PTC resistor (R1) or a second PTC resistor (R2) in-circuit.

9. Degaussing circuit according to claim 7, comprising a first degaussing coil (DGC1) and a second degaussing coil (DGC2), wherein said first degaussing coil (DGC1) and said second degaussing coil (DGC2) are selectively connected in series or in parallel.

10. Process for degaussing a cathode ray tube with a degaussing circuit fed by a voltage, comprising the successive steps of :
- sensing said voltage (t1) ;
- selecting an impedance of said degaussing circuit based on said voltage (t2) ;
- supplying said voltage to said degaussing circuit (t3).
